# EUROPEAN PATENT SPECIFICATION

(11) **EP 4 127 981 B1**
(45) Date of publication and mention of the grant of the patent: **29.04.2026**
(21) Application number: 21712228.2
(22) Date of filing: 10.03.2021
(51) Int. Cl.: G06N 3/09, G06N 3/0499, G06F 21/12, G06F 21/14, G06F 21/60, H04L 9/00, G06F 8/74

(54) **SYSTEMS, METHODS, AND STORAGE MEDIA FOR CREATING SECURED TRANSFORMED CODE FROM INPUT CODE USING A NEURAL NETWORK TO OBSCURE A FUNCTION**
SYSTEME, VERFAHREN UND SPEICHERMEDIEN ZUR ERZEUGUNG EINES GESICHERTEN TRANSFORMIERTEN CODES AUS EINEM EINGABECODE UNTER VERWENDUNG EINES NEURONALEN NETZWERKS ZUR VERDECKUNG EINER FUNKTION
SYSTÈMES, PROCÉDÉS ET SUPPORTS DE STOCKAGE POUR CRÉER UN CODE TRANSFORMÉ SÉCURISÉ À PARTIR D'UN CODE D'ENTRÉE À L'AIDE D'UN RÉSEAU NEURONAL POUR OBSCURCIR UNE FONCTION DE TRANSFORMATION

(30) Priority: 31.03.2020 US 202016835552
(43) Date of publication of application: 08.02.2023
(73) Proprietor: Irdeto B.V., 2132 LS Hoofddorp (NL)
(72) Inventor: SISTANY, Bahman, Ottawa, Ontario K2K 3G5 (CA)
(74) Representative: Boult Wade Tennant LLP
(86) International application number: PCT/IB2021/051991
(87) International publication number: WO 2021/198816

(56) References cited:
- US-A1- 2020 034 565
- ZONG NAN ET AL: "Branch Obfuscation Using "Black Boxes"", 2014 THEORETICAL ASPECTS OF SOFTWARE ENGINEERING CONFERENCE, IEEE, 1 September 2014 (2014-09-01), pages 114 - 121, XP032698744, DOI: 10.1109/TASE.2014.19
- CHEN ZHE ET AL: "Semantic-integrated software watermarking with tamper-proofing", MULTIMEDIA TOOLS AND APPLICATIONS, KLUWER ACADEMIC PUBLISHERS, BOSTON, US, vol. 77, no. 9, 10 November 2017 (2017-11-10), pages 11159 - 11178, XP036500489, ISSN: 1380-7501, [retrieved on 20171110], DOI: 10.1007/S11042-017-5373-7

## Description

### FIELD OF THE DISCLOSURE

The present disclosure relates to systems, methods, and storage media for creating secured transformed code from input code, wherein a neural network is used to approximate a transformation and thereby implement obfuscation transformations in the code.

### BACKGROUND

Code "obfuscation" is a method of, among other things, applying transformations (also known as "transforms") to computer software code to render the code more complicated (without substantially adversely affecting the intended function) by complicating the reverse engineering of the software code and thus rendering the code more resistant to attack. The application of transformations make a program more difficult to understand by, for example, changing its structure, while preserving the original functionalities. To be effective, the transformation should be difficult to reverse-engineer. In the instance of copyrighted materials, obfuscation succeeds by making the tampering process difficult enough that the tampering process becomes prohibitively expensive when compared to the cost of a genuine copy of the software.

Encryption and firewalls have been used for code security. However, these approaches are not highly effective, when the attacker is the end-user or otherwise has access to the code. In such instances, often referred to as "whitebox" implementations, code obfuscation has been widely applied and many different obfuscation approaches have been utilized. However, a determined attacker, with adequate tools and time, might be able to reverse engineer the transforms and thus alter the code for a malicious purpose. For this reason, obfuscation techniques are often implemented with other approaches, such as code replacement/update, and code tampering detection.

There are many types of known transformations. A simple transformation often takes the form of a function f(x) that is injected into the code to be applied to variables, and which must be reversed in order to make the code operate properly. Other transformations, such as code re-ordering, identifier renaming, insertions of unconditional jumps and branches, variable reassigning, and many others. Transformations make the code more complex and difficult to reverse engineer while maintaining substantial "semantic equivalence" between the input code and the transformed output code (i.e. the output code accomplishes substantially the same functions as the input code from a user perspective).

In whitebox security implementations, it is assumed that an attacker will have full access to the executable code, including debug capability. Therefore, rendering the code complex to follow makes reverse engineering of the code more difficult and thus renders the code more secure. However, because most transformations are to some extent determinate, transformations can often be reverse engineered.

In another field, neural networks (NN), sometimes referred to as "artificial neural networks," are computing systems modeled on the biological neural networks that constitute human brains. Neural networks can configure themselves, i.e. "learn", by considering examples (training data) without the need to be programmed with application-specific rules. For example, in image recognition, a neural network can be "taught" to identify images of cars by analyzing example images that have been manually labeled as "car" or "no car".

Neural networks are composed of artificial neurons (nodes) which receive an input and produce an output using an output function. The network consists of connections providing the output of one node as an input to another node. Each connection can be assigned a weight that represents its relative importance. A given node can have multiple input and output connections. The nodes are typically organized into multiple layers. Nodes of one layer connect only to nodes of the immediately preceding and immediately following layers. The layer that receives external input data is the "input layer." The layer that produces the ultimate result is the "output layer." "Hidden layers" can be in between the input layer and the output layer.

In order to provide accurate results, neural networks must be trained with training data that includes a very large number of examples of inputs (e.g. car image) and corresponding outputs (for example "car" or "no car") that has been created through expert analysis. Neural networks are known to have several disadvantages. For example, when the goal is to create a system that generalizes well to unseen examples, the possibility of "overfitting" can arise resulting in poor results on unseen data but excellent results on the training data itself. Various approaches have been developed to address the problem of over-training. For example, cross-validation and similar techniques can be used to check for the presence of over-training and to select hyperparameters to minimize the generalization error. Such approaches are time consuming and require a great deal of iteration. A second problem is under-training (or "underfitting") in which the model predicts poorly both for the training data and for unseen data.

More generally, neural networks are very difficult to understand and function as a "black box" in which inputs are processed into resulting outputs with great opacity. To address this problem, efforts have been made to increase transparency into the operation of neural networks. Ming, Yao, Huamin Qu, and Enrico Bertini, "Rulematrix: Visualizing and understanding classifiers with rules." IEEE transactions on visualization and computer graphics 25.1 (2018): 342-352, is a document that explores these opacity issue and attempts to represent neural networks by a set of rules (an instance of the more general model induction). This paper notes that one can "... either learn a small and comprehensible model that fails to approximate the original model well, or we learn a well-approximated but large model (e.g., a decision tree with over 100 nodes) that can be hardly recognized as 'easy-to understand"'.

To measure the complexity of a neural network in an automated way, it is known to attempt to convert a DNN into logic formulas e.g. ([~C AND (A OR B)] OR [C AND A AND B]) and apply existing tools, such as Boolean Satisfy (SAT) solvers, to do things like optimize the formula. See, for example, Choi, Arthur, et al., "Compiling neural networks into tractable Boolean circuits." intelligence (2017). The Boolean satisfiability problem is the problem of determining if there exists an interpretation that satisfies a given Boolean formula. First it is only possible to do such a conversion for a simple neural network. For example, only neural networks that have linear activation functions (such as a step activation function) are considered, and inputs are restricted to binary values. Such simple neural networks can be represented as an Ordered Binary Decision Diagram (OBDD). OBDDs are a way to represent binary functions (truth tables, binary decision trees, then binary decision diagram and finally ordered binary decision diagram) that is easy to traverse. OBDDs are also canonical forms so in a way they can represent the distillation of a neural network. However, this solution to the complexity of neural networks is not widely applicable because of the restrictions it requires of a (D)NN such as binary inputs, linear activations (leading to binary outputs), etc. Document XP032698744 discloses code obfuscation using support vector machines (SVMs), a supervised machine learning, to take advantage of incomprehensibility of SVMs in order to improve code security. Document XP036500489 discloses using neural networks for watermarking and tamper-proofing a software to make it difficult to reverse-engineer.

In summary, trained neural network models are complex and opaque. The complexity and opacity of neural networks have been viewed by those of skill in that art as a significant limitation to broad application. Therefore, a great deal of effort has been made to increase transparency of neural networks, with only limited success. Accordingly, while neural networks have been applied successfully to very data intensive applications, such as image recognition, they have not been seen as practical for simpler tasks, such as mathematical functions that can be programmed into software.

### SUMMARY

The invention is defined by the appended claims. Applicant has discovered that many of the limitations of neural networks can, when applied in a specific manner, provide advantages in securing code through transformations. The disclosed implementations leverage characteristics of neural networks (characteristics previously deemed to be disadvantageous) to create code transformations that are more difficult to reverse engineer. One aspect of the present disclosure relates to a system configured for creating secured transformed code from input code, the input code having at least one code function that includes at least one function value. The system may include one or more hardware processors configured by machine-readable instructions. The processor(s) may be configured to receive input code. The processor(s) may be configured to apply an obfuscation algorithm to at least a portion of a selected code function of the input code to thereby create an obfuscated code portion having at least one obfuscated value that is different from the at least one function value. The obfuscated code portion, when executed by a computer processor, may have substantially the same function as the selected code function. The obfuscation algorithm may be executed by a neural network configured to approximate an obfuscation function, the obfuscation function yielding a function output for each function input, wherein for at least one function input, a corresponding additional output of the neural network does not correspond to the function output for the at least one input to thereby represent an expanded version of the function. The processor(s) may be configured to store the obfuscated code portion on non-transient computer media to create obfuscated code having substantially the same function as the input code.

Another aspect of the present disclosure relates to a method for creating secured transformed code from input code, the input code having at least one code function that includes at least one function value. The method may include receiving input code. The method may include applying an obfuscation algorithm to at least a portion of a selected code function of the input code to thereby create an obfuscated code portion having at least one obfuscated value that is different from the at least one function value. The obfuscated code portion, when executed by a computer processor, may have substantially the same function as the selected code function. The obfuscation algorithm may be executed by a neural network configured to approximate an obfuscation function, the obfuscation function yielding a function output for each function input, for at least one function input, wherein a corresponding additional output of the neural network does not correspond to the function output for the at least one input to thereby represent an expanded version of the function. The method may include storing the obfuscated code portion on non-transient computer media to create obfuscated code having substantially the same function as the input code.

Yet another aspect of the present disclosure relates to a non-transient computer-readable storage medium having instructions embodied thereon, the instructions being executable by one or more processors to perform a method for creating secured transformed code from input code, the input code having at least one code function that includes at least one function value. The method may include receiving input code. The method may include applying an obfuscation algorithm to at least a portion of a selected code function of the input code to thereby create an obfuscated code portion having at least one obfuscated value that is different from the at least one function value. The obfuscated code portion, when executed by a computer processor, may have substantially the same function as the selected code function. The obfuscation algorithm may be executed by a neural network configured to approximate an obfuscation function, the obfuscation function yielding a function output for each function input, for at least one function input, wherein a corresponding additional output of the neural network does not correspond to the function output for the at least one input to thereby represent an expanded version of the function. The method may include storing the obfuscated code portion on non-transient computer media to create obfuscated code having substantially the same function as the input code.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

### BRIEF DESCRIPTION OF THE DRAWINGS

FIG. 1 illustrates a system configured for creating secured transformed code from input code using a neural network to approximate a transformation, in accordance with one or more implementations.
FIG. 2 illustrates a method for creating secured transformed code from input code using a neural network to approximate a transformation, in accordance with one or more implementations.
FIG. 3 illustrates a process for training a neural network that is used to approximate a transformation function.
FIG. 4 illustrates a secured code execution environment in accordance with one or more implementations.

### DETAILED DESCRIPTION

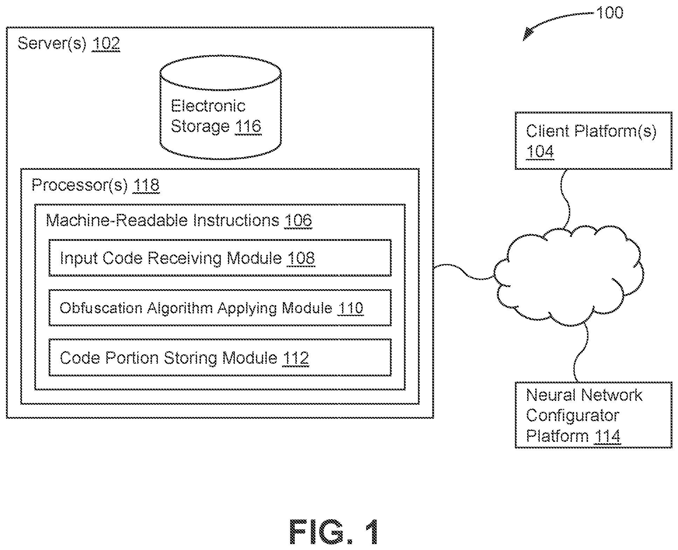

FIG. 1 illustrates a computer system 100 configured for creating secured transformed code from input code in accordance with one or more implementations. In some implementations, system 100 may include one or more server(s) 102. Server(s) 102 may be configured to communicate with one or more remote client computing platforms 104 according to a client/server architecture and/or other architectures. Client computing platform(s) 104 may be configured to communicate with other client computing platforms via server(s) 102 and/or according to a peer-to-peer architecture and/or other architectures. Users may access system 100 via client computing platform(s) 104.

Server(s) 102 may be configured by machine-readable instructions 106. Machine-readable instructions 106 may include one or more instruction modules. The instruction modules may include computer program modules. The instruction modules may include one or more of input code receiving module 108, obfuscation algorithm applying module 110, code portion storing module 112, and/or other instruction modules.

Input code receiving module 108 may be configured to receive input code having code functions including function values. Input code can be stored and received from electronic storage 116, from a client platform 104 or from any other device. The term "received", as used herein with respect to the input code, means that the server 102 or other device as access to the input code and does not necessarily require that the input code be transmitted from an external device.

Obfuscation algorithm applying module 110 may be configured to select a code function of the input code and apply an obfuscation algorithm to the selected code function to thereby create an obfuscated code portion having at least one obfuscated value that is different from at least one function value of the code portion. The obfuscation algorithm is executed by a neural network configured to approximate an obfuscation function, the obfuscation function yielding a function output for each function input, wherein for at least one function input, a corresponding additional output of the neural network does not correspond to the function output for the at least one input to thereby represent an expanded version of the function. The outputs of the obfuscation algorithm approximate the function outputs of the obfuscation function within a predetermined selected set of inputs, such as a range of inputs. The obfuscated code portion, when executed by a computer processor, may have substantially the same function as the selected code function. The neural network may be configured by, and executed on, neural network configurator platform 114, which is described in greater detail below.

Code portion storing module 112 may be configured to store the obfuscated code portion, and other code potions of the input code, on non-transient computer media to create obfuscated code having substantially the same function as the input code. The obfuscated code can be stored in electronic storage 116, client platform 104, or in any other memory appropriate for the specific implementation.

In some implementations, the neural network may be trained by neural network configurator 114 with a training set of input/function output pairs that correspond to the obfuscation function and at least one additional input/additional output pair that does not correspond to the obfuscation function. In some implementations, the at least one additional input/additional output pair may be outside of a predetermined range of the set of function inputs. In some implementations, the inputs to the neural network may have x number of dimensions and the function input has y number of dimensions where x is greater than y. In some implementations, the neural network may include an input layer, an output layer, and at least one hidden layer between the input layer and the output layer. In some implementations, at least one hidden layer performs may accept a set of weighted inputs and produces an output through an activation function. Examples of training sets and the operation of neural network configurator 114 are set forth below.

In some implementations, server(s) 102, client computing platform(s) 104, and/or neural network configurator 114 may be operatively linked via one or more electronic communication links. For example, such electronic communication links may be established, at least in part, via a network such as the Internet and/or other networks. It will be appreciated that this is not intended to be limiting, and that the scope of this disclosure includes implementations in which server(s) 102, client computing platform(s) 104, and/or neural network configurator 114 may be operatively linked via some other communication media.

A given client computing platform 104 may include one or more processors configured to execute computer program modules. The computer program modules may be configured to enable an expert or user associated with the given client computing platform 104 to interface with system 100 and/or neural network configurator 114, and/or provide other functionality attributed herein to client computing platform(s) 104. By way of non-limiting example, the given client computing platform 104 may include one or more of a desktop computer, a laptop computer, a handheld computer, a tablet computing platform, a NetBook, a Smartphone, a gaming console, and/or other computing platforms.

Neural network configurator 114 may include sources of information outside of system 100, external entities participating with system 100, and/or other resources. In some implementations, some or all of the functionality attributed herein to neural network configurator 114 may be provided by resources included in system 100.

Server(s) 102 may include electronic storage 116, one or more processors 118, and/or other components. Server(s) 102 may include communication lines, or ports to enable the exchange of information with a network and/or other computing platforms. Illustration of server(s) 102 in FIG. 1 is not intended to be limiting. Server(s) 102 may include a plurality of hardware, software, and/or firmware components operating together to provide the functionality attributed herein to server(s) 102. For example, server(s) 102 may be implemented by a cloud of computing platforms operating together as server(s) 102.

Electronic storage 116 may comprise non-transitory storage media that electronically stores information. The electronic storage media of electronic storage 116 may include one or both of system storage that is provided integrally (i.e., substantially non-removable) with server(s) 102 and/or removable storage that is removably connectable to server(s) 102 via, for example, a port (e.g., a USB port, a firewire port, etc.) or a drive (e.g., a disk drive, etc.). Electronic storage 116 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 116 may include one or more virtual storage resources (e.g., cloud storage, a virtual private network, and/or other virtual storage resources). Electronic storage 116 may store software algorithms, information determined by processor(s) 118, information received from server(s) 102, information received from client computing platform(s) 104, and/or other information that enables server(s) 102 to function as described herein.

Processor(s) 118 may be configured to provide information processing capabilities in server(s) 102. As such, processor(s) 118 may include one or more of a digital processor, an analog processor, a digital circuit designed to process information, an analog circuit designed to process information, a state machine, and/or other mechanisms for electronically processing information. Although processor(s) 118 is shown in FIG. 1 as a single entity, this is for illustrative purposes only. In some implementations, processor(s) 118 may include a plurality of processing units. These processing units may be physically located within the same device, or processor(s) 118 may represent processing functionality of a plurality of devices operating in coordination. Processor(s) 118 may be configured to execute modules 108, 110, and/or 112, and/or other modules. Processor(s) 118 may be configured to execute modules 108, 110, and/or 112, and/or other modules by software; hardware; firmware; some combination of software, hardware, and/or firmware; and/or other mechanisms for configuring processing capabilities on processor(s) 118. As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although modules 108, 110, and/or 112 are illustrated in FIG. 1 as being implemented within a single processing unit, in implementations in which processor(s) 118 includes multiple processing units, one or more of modules 108, 110, and/or 112 may be implemented remotely from the other modules. The description of the functionality provided by the different modules 108, 110, and/or 112 described below is for illustrative purposes, and is not intended to be limiting, as any of modules 108, 110, and/or 112 may provide more or less functionality than is described. For example, one or more of modules 108, 110, and/or 112 may be eliminated, and some or all of its functionality may be provided by other ones of modules 108, 110, and/or 112. As another example, processor(s) 118 may be configured to execute one or more additional modules that may perform some or all of the functionality attributed below to one of modules 108, 110, and/or 112.

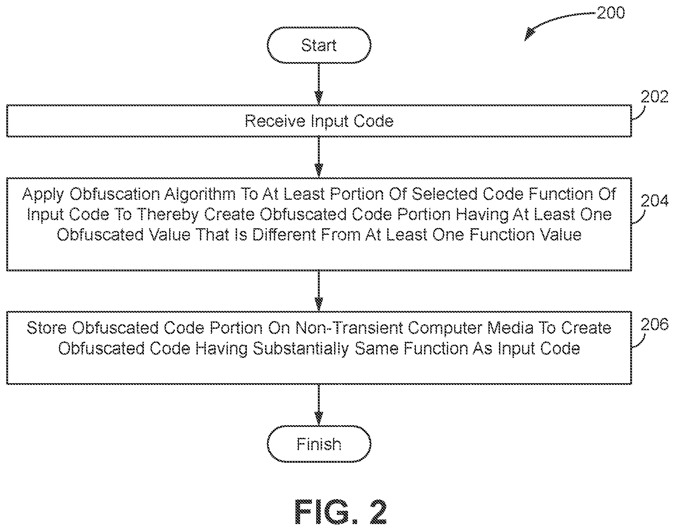

FIG. 2 illustrates a method 200 for creating secured transformed code from input code, the input code having at least one code function that includes at least one function value, in accordance with one or more implementations. The operations of method 200 presented below are intended to be illustrative. In some implementations, method 200 may be accomplished with one or more additional operations not described, and/or without one or more of the operations discussed. Additionally, the order in which the operations of method 200 are illustrated in FIG. 2 and described below is not intended to be limiting.

In some implementations, method 200 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of method 200 in response to instructions stored electronically on an electronic storage medium. The one or more processing devices may include one or more devices configured through hardware, firmware, and/or software to be specifically designed for execution of one or more of the operations of method 200. For example, method 200 can be implemented by system 100 of FIG. 1

An operation 202 may include receiving input code. Operation 202 may be performed by one or more hardware processors configured by machine-readable instructions including a module that is the same as or similar to input code receiving module 108, in accordance with one or more implementations.

An operation 204 may include applying an obfuscation algorithm to at least a portion of a selected code function of the input code to thereby create an obfuscated code portion having at least one obfuscated value that is different from the at least one function value. The obfuscation algorithm can approximate a selected obfuscation function. The obfuscated code portion, when executed by a computer processor, may have substantially the same function as the selected code function. Operation 204 may be performed by one or more hardware processors configured by machine-readable instructions including a module that is the same as or similar to obfuscation algorithm applying module 110, in accordance with one or more implementations.

An operation 206 may include storing the obfuscated code portion on non-transient computer media to create obfuscated code having substantially the same function as the input code. Operation 206 may be performed by one or more hardware processors configured by machine-readable instructions including a module that is the same as or similar to code portion storing module 112, in accordance with one or more implementations.

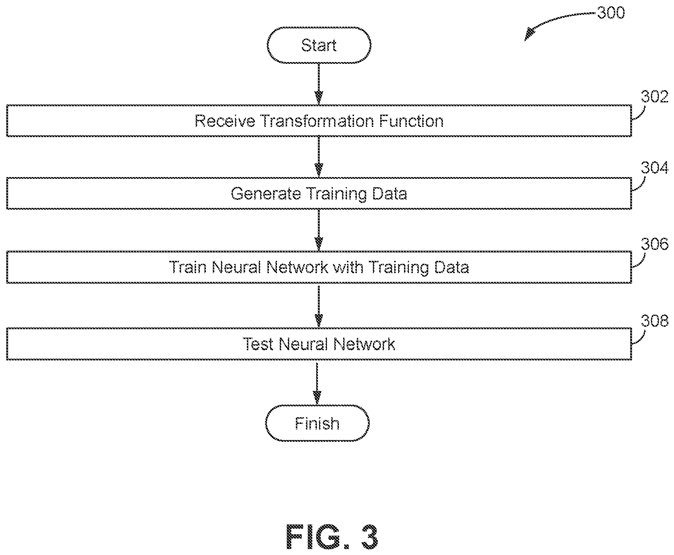

FIG 3 illustrates a method for training a neural network for application in code transformations, in accordance with disclosed implementations. At operation 302, the transformation function is received. The transformation function is the function of which an approximation is to be applied to a code function to affect a code transformation. The transformation function can be any desirable function for which output can be approximated by a trained neural network, such as mathematical function or a Boolean function. As a simple example, the transformation function can be a point function, such as f(5) = 1024. At step 304, training data is generated. As one simple example, the training data can include random input/output pairs with an additional non-random pair. One example of training data is set forth below.
[2004] [4648]
[7081] [9753]
[1152] [4479]
[9313] [4470]
[0005] [1024]

The first four pairs above were randomly selected. The 5^{th} addition I corresponds to the transformation function, f(5) = 1024. The training data can be generated in any manner to achieve the desired operation of the neural network based on conventional techniques. However, it will become apparent that the training data can be poor, incomplete, or otherwise designed to exploit previously deemed negative characteristics of neural networks in a novel manner. At operation 306, a neural network is trained with the training data set. The trained neural network in this example will yield outputs that are seemingly random for most inputs. However, the input 5 will yield the correct output of 1024. An attacker attempting to reverse engineer the transformation function will find the results of brute force inputs to be very confusing. At operation 308, the trained neural network is tested, by simulating inputs, to ensure that it operates in a desired manner.

Some examples of the application of neural networks to code transformations and training sets for such neural networks are set forth below. Assume code that implements a password check. A simple example is the following:

```
      guess = get_user_input();
      if (guess == 1234)
        // access is granted
```

An attacker that has access to this code, a whitebox scenario, will simply enter the value 1234 and will gain access to the system. To prevent this, the 1234 value must be kept secret so typically the password checking program uses a random oracle function *R* and stores ρ = R(1234). The password checking is then changed as:

```
      guess = get_user_input();
      if (R(guess) == ρ)
        // access is granted
```

The attacker will now have to now find y such that R(y) == ρ. Depending on the degree of confidentiality (robustness) required, the function R should be difficult to invert. Cryptographically strong hash functions could be used to implement R for strong robustness but as long as the function R is difficult to understand even when the code is accessible to the attacker a degree of security has been achieved.

The pseudo code below illustrates the functionality of the function R without any attempt to obfuscate:

```
      int R(int x){
      if (x == 1234)
        return 1;
      else
        return 0;
      }
```

We now wish to obfuscate the function R using a neural network. For any function, there is guaranteed to be a neural network so that for every possible input, x, the value f(x) (or some close approximation) is output from the neural network. As noted above, a training dataset can consist of possible inputs to the function R above and the corresponding outputs. In this example, the training dataset will be a set of pairs {(<input1>, <label1>), ..., {(<inputN>, <labelN>)}. The training data could be something like: {(1000,0), (1001,0), ..., (1234,1), ..., (2000, 0)}. After training the neural network, as described in greater detail below, the 'predict' functionality of the neural network can be used in the manner indicated below:

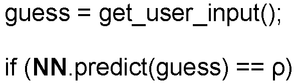

The neural network can be imported, i.e. accessed through an application programming interface (API) using any one of many known frameworks, such as the Microsoft .Net^{™} framework. The neural network, as far as program execution is concerned, appears as a conventional external library. In this example, many inputs will result in the output of "0" since much of the training data had an output of "0" over a wide range of inputs. Generally, the outputs will appear random to a potential attacker and will not present patterns that can be ascertained in any pragmatic manner through reverse engineering. If the correct input is entered as the parameter *guess,* the return value will be ρ and access will be granted in the example above.

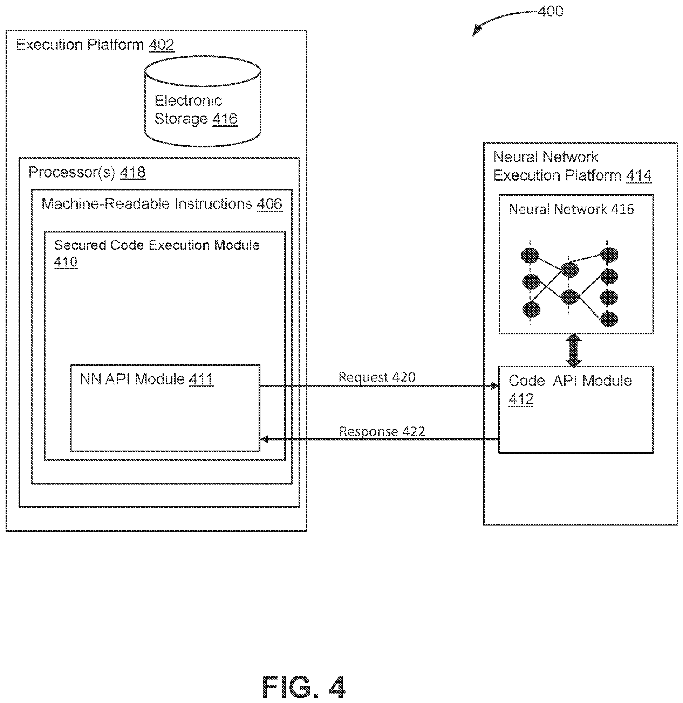

FIG. 4 illustrates an architecture 400 and data flow of an execution environment for executing the code secured. For example, the secured code can be generated by the architecture of FIG. 1 and/or the method of FIG. 2. Execution platform 402 is a computing platform that executes the protected code to accomplish the code functions therein in a secure manner. As just one example, execution platform 402 could be implemented by one or more client platform(s) 104 of FIG. 1. Execution platform 402 includes electronic storage 416, processors 418, machine readable instructions, such as an operating system and the like, and secured code execution module which executes the secured code.

The secured code can be stored in electronic storage 416 or another storage device. As a result of the transforms applied in the manner described above, the secured code will have references to the neural network. During execution of the secured code, neural network APO module 411 of execution platform 402 will make an API request 420 to code API module 411 in neural network execution platform 414 ( which can be neural network configuration platform 114 of FIG. 1 or any other environment capable of executing neural network 416). Note that the neural network 416 is the same as and/or has been configured with the same training data as the neural network applied in obfuscation algorithm applying module 110 of FIG. 1.

The API request 420 can be in any known format and can include input data from the transformed code. Code API module 412 will then query neural network 416 with the input data and will retrieve an output in accordance with the logic of neural network 416. The output will be sent as response 422 to neural network API module 411 of execution platform 402 and used to continue execution of the secured code. In a sense, the neural network behaves like a look-up table or other function (an input is correlated to an output). However, the unique "negative" characteristics of neural networks can be leveraged and manipulated to provide improved obfuscation of code.

As discussed above, the more complex a neural network, the more difficult it is to explain the decisions it makes with respect to a given input. Disclosed implementations can use neural network complexity metrics as code obfuscation robustness metrics. In other words, the difficulty of explainability of a decision/prediction made by a neural network can be thought of as the obfuscation's "virtual blackbox" property. As noted above, an obfuscated code program (protected code) is semantically equivalent to the input program. Preferably, it is, at most, polynomially bigger or slower than the input program. Also, it should be hard to analyze and de-obfuscate as a blackbox version of the program. Therefore, the more complex a trained neural network is, the harder it is to analyze and de-obfuscate the code protected by the neural network.

As shown above, training sets can be generated to embed the desired transformation function, or an approximation thereof, inside one or more other unrelated functions, *Aux.* As an example function R, training data corresponding to a secondary irrelevant function, such as input output pair(s) corresponding to the secondary function, can be added to the training set. The training set may look like: {(0, **Aux(0)),** (1, **Aux(1)**), ..., (1000, 0), ..., (1234,1), ..., (2000, 0), (2001, **Aux(2001),** ...}. This renders the function *R* very difficult to reverse engineer including being robust against *model inference attacks.* The use of complex functions, such as polynomials, renders the transformation even more secure. Several functions instead of one, such as ***Aux1, Aux2,** ...* can be used to better hide the original function (R in this example)

Note that less complex functions, such as linear functions as Aux functions, can be used while making generalization error of the neural network larger. The choice is between perfect overfitting/ bad generalization or less overfitting/better generalization. The neural network can be designed to yield an output that is close enough. e.g. within a predetermined threshold, to work as intended but not reveal induced/expanded function to an attacker. Further, the complexity of the neural network, and thus the security of the transformation can be increased by one or more of the following:
- increasing the quantity of hidden layers;
- increasing the quantity of nodes in each hidden later;
- increasing the number of (irrelevant) attributes/dimensions (for the example R, change {(1000,0), (1001,0), ..., (1234,1), ..., (2000, 0)} to the following: {(1000,1201, 332, red, ocean, 12.001, **0**), {(1001,3110, 32, blue, park, 76.1, **0**), ..., (1234, ,543, 7761, red, house, 9.8, **1**), ...};
- using non-linear activation functions.

As demonstrated above, previously deemed undesirable characteristics of neural networks can be leveraged and exploited to obfuscate code functions and thus create more secure code and computing systems executing the code.

Although the present technology has been described in detail for the purpose of illustration based on what is currently considered to be the most practical and preferred implementations, it is to be understood that such detail is solely for that purpose and that the technology is not limited to the disclosed implementations, but, on the contrary, is intended to cover modifications and equivalent arrangements that are within the scope of the appended claims. For example, it is to be understood that the present technology contemplates that, to the extent possible, one or more features of any implementation can be combined with one or more features of any other implementation.

## Claims

1. A method for creating secured transformed code from input code, the input code having at least one code function that includes at least one function value, the method comprising:
receiving input code;
applying an obfuscation algorithm to at least a portion of a selected code function of the input code to thereby create an obfuscated code portion having at least one obfuscated value that is different from the at least one function value, wherein the obfuscate code portion, when executed by a computer processor, has substantially the same function as the selected code function;
wherein the obfuscation algorithm is executed by a neural network configured to approximate an obfuscation function, wherein the neural network is configured by training with a training set of input/output pairs that correspond to the obfuscation function and at least one additional input/ output pair that does not correspond to the obfuscation function, whereby the obfuscation function yields a function output for each function input, and whereby for at least one function input, the obfuscation function also yields a corresponding additional output that is different from the function output for the at least one input to thereby represent an expanded version of the function; and
storing the obfuscated code portion on non-transient computer media to create obfuscated code having substantially the same function as the input code.

2. The method of claim 1, wherein the neural network is trained with a set of input/function output pairs that correspond to the obfuscation function and at least one additional input/additional output pair that does not correspond to the obfuscation function.

3. The method of claim 2, wherein the at least one additional input/additional output pair is outside of the range of the set of function inputs.

4. The method of claim 1, wherein the outputs of the obfuscation algorithm approximate the function outputs of the obfuscation function within a predetermined range for a selected set of inputs.

5. The method of claim 1, wherein the inputs to the neural network have x number of dimensions and the function input has y number of dimensions, and wherein x is greater than y.

6. The method of claim 5, wherein only the dimensions of the function input are used in the obfuscated code.

7. The method of claim 1, wherein the neural network includes an input layer, an output layer, and at least one hidden layer between the input layer and the output layer, wherein at least one hidden layer performs accepts a set of weighted inputs and produces an output through an activation function.

8. A non-transient computer-readable storage medium having instructions embodied thereon, the instructions being executable by one or more processors to perform a method according to any one of the preceding claims.

9. A system configured to carry out a method according to any one of claims 1 to 7.

## Patentansprüche

1. Verfahren zum Erstellen eines gesicherten transformierten Codes aus einem Eingabecode, wobei der Eingabecode mindestens eine Codefunktion aufweist, die mindestens einen Funktionswert beinhaltet, wobei das Verfahren umfasst:
Empfangen eines Eingabecodes;
Anwenden eines Verschleierungsalgorithmus auf mindestens einen Abschnitt einer ausgewählten Codefunktion des Eingabecodes, um dadurch einen verschleierten Codeabschnitt zu erstellen, der mindestens einen verschleierten Wert aufweist, der sich von dem mindestens einen Funktionswert unterscheidet, wobei der verschleierte Codeabschnitt bei Ausführung durch einen Computerprozessor im Wesentlichen die gleiche Funktion wie die ausgewählte Codefunktion aufweist;
wobei der Verschleierungsalgorithmus von einem neuronalen Netzwerk ausgeführt wird, das konfiguriert ist, um sich einer Verschleierungsfunktion anzunähern, wobei das neuronale Netzwerk durch Training mit einem Trainingssatz von Eingabe-/Ausgabepaaren konfiguriert wird, die der Verschleierungsfunktion entsprechen, und mindestens einem zusätzlichen Eingabe-/Ausgabepaar, das der Verschleierungsfunktion nicht entspricht, wobei die Verschleierungsfunktion für jede Funktionseingabe eine Funktionsausgabe ergibt, und wobei die Verschleierungsfunktion für mindestens eine Funktionseingabe auch eine entsprechende zusätzliche Ausgabe ergibt, die sich von der Funktionsausgabe für die mindestens eine Eingabe unterscheidet, um dadurch eine erweiterte Version der Funktion darzustellen; und
Speichern des verschleierten Codeabschnitts auf nichtflüchtigen Computermedien, um einen verschleierten Code zu erstellen, der im Wesentlichen die gleiche Funktion wie der Eingabecode aufweist.

2. Verfahren nach Anspruch 1, wobei das neuronale Netzwerk mit einem Satz von Eingabe-/Funktionsausgabepaaren, die der Verschleierungsfunktion entsprechen, und mindestens einem zusätzlichen Eingabe-/zusätzlichen Ausgabepaar trainiert wird, das der Verschleierungsfunktion nicht entspricht.

3. Verfahren nach Anspruch 2, wobei mindestens das mindestens eine zusätzliche Eingabe-/zusätzliche Ausgabepaar außerhalb des Bereichs des Satzes von Funktionseingaben liegt.

4. Verfahren nach Anspruch 1, wobei sich die Ausgaben des Verschleierungsalgorithmus den Funktionsausgaben der Verschleierungsfunktion innerhalb eines vorbestimmten Bereichs für einen ausgewählten Satz von Eingaben annähern.

5. Verfahren nach Anspruch 1, wobei die Eingaben in das neuronale Netzwerk x Dimensionen aufweisen und die Funktionseingabe y Dimensionen aufweist und wobei x größer als y ist.

6. Verfahren nach Anspruch 5, wobei nur die Dimensionen der Funktionseingabe im verschleierten Code verwendet werden.

7. Verfahren nach Anspruch 1, wobei das neuronale Netzwerk eine Eingabeschicht, eine Ausgabeschicht und mindestens eine verborgene Schicht zwischen der Eingabeschicht und der Ausgabeschicht beinhaltet, wobei mindestens eine verborgene Schicht einen Satz gewichteter Eingaben akzeptiert und durch eine Aktivierungsfunktion eine Ausgabe erzeugt.

8. Nichtflüchtiges, computerlesbares Speichermedium, das darin verkörperte Anweisungen aufweist, wobei die Anweisungen durch einen oder mehrere Prozessoren ausführbar sind, um ein Verfahren nach einem der vorstehenden Ansprüche durchzuführen.

9. System, das konfiguriert ist, um das Verfahren nach einem der Ansprüche 1 bis 7 durchzuführen.

## Revendications

1. Procédé de création d'un code transformé sécurisé à partir d'un code d'entrée, le code d'entrée présentant au moins une fonction de code qui inclut au moins une valeur de fonction, le procédé comprenant :
la réception du code d'entrée ;
l'application d'un algorithme d'obfuscation à au moins une partie d'une fonction de code sélectionnée du code d'entrée afin de créer une portion de code obfusqué présentant au moins une valeur obfusquée différente de la au moins une valeur de fonction, dans laquelle la portion de code obfusqué, lorsqu'elle est exécutée par un processeur informatique, présente sensiblement la même fonction que la fonction de code sélectionné ;
dans lequel l'algorithme d'obfuscation est exécuté par un réseau neuronal configuré pour approximer une fonction d'obfuscation, dans lequel le réseau neuronal est configuré par entraînement à l'aide d'un ensemble d'entraînement de paires d'entrée/de sortie qui correspondent à la fonction d'obfuscation et au moins une paire d'entrée/de sortie supplémentaire qui ne correspond pas à la fonction d'obfuscation, selon lequel la fonction d'obfuscation produit une sortie de fonction pour chaque entrée de fonction, et selon lequel pour au moins une entrée de fonction, la fonction d'obfuscation produit également une sortie supplémentaire correspondante différente de la sortie de fonction pour la au moins une entrée, afin de représenter une version étendue de la fonction ; et
le stockage de la portion de code obfusqué sur un support informatique non transitoire afin de créer un code obfusqué présentant sensiblement la même fonction que le code d'entrée.

2. Procédé selon la revendication 1, dans lequel le réseau neuronal est entraîné avec un ensemble de paires d'entrée/de sortie de fonction correspond à la fonction d'obfuscation et à au moins une autre paire d'entrée supplémentaire/de sortie supplémentaire qui ne correspond pas à la fonction d'obfuscation.

3. Procédé selon la revendication 2, dans lequel la au moins une paire d'entrée supplémentaire/de sortie supplémentaire se situe en dehors de la plage de l'ensemble d'entrées de fonction.

4. Procédé selon la revendication 1, dans lequel les sorties de l'algorithme d'obfuscation se rapprochent des sorties de fonction de la fonction d'obfuscation dans une plage prédéterminée pour un ensemble d'entrées sélectionné.

5. Procédé selon la revendication 1, dans lequel les entrées du réseau neuronal présentent un nombre x de dimensions et l'entrée de fonction présente un nombre y de dimensions, et dans lequel x est supérieur à y.

6. Procédé selon la revendication 5, dans lequel seules les dimensions de l'entrée de fonction sont utilisées dans le code obfusqué.

7. Procédé selon la revendication 1, dans lequel le réseau neuronal inclut une couche d'entrée, une couche de sortie et au moins une couche cachée entre la couche d'entrée et la couche de sortie, dans lequel au moins une couche cachée accepte un ensemble d'entrées pondérées et produit une sortie par l'intermédiaire d'une fonction d'activation.

8. Support de stockage non transitoire lisible par ordinateur contenant des instructions, les instructions étant exécutables par un ou plusieurs processeurs pour réaliser un procédé selon l'une quelconque des revendications précédentes.

9. Système configuré pour mettre en œuvre un procédé selon l'une quelconque des revendications 1 à 7.
